Europäisches Patentamt

(19) European Patent Office

Office européen des brevets

(11) Veröffentlichungsnummer: **0 088 311**
**B1**

(12) **EUROPÄISCHE PATENTSCHRIFT**

(45) Veröffentlichungstag der Patentschrift:
09.04.86

(51) Int. Cl.⁴: **F 16 B 13/02**

(21) Anmeldenummer: 83101876.7

(22) Anmeldetag: 25.02.83

(54) **Einspannelement für ein Bauteil, insbesondere eine Schraube.**

(30) Priorität: 05.03.82 HU 68082

(43) Veröffentlichungstag der Anmeldung:
14.09.83 Patentblatt 83/37

(45) Bekanntmachung des Hinweises auf die Patenterteilung:
09.04.86 Patentblatt 86/15

(84) Benannte Vertragsstaaten:
AT DE FR NL SE

(56) Entgegenhaltungen:
AT - B - 106 026
CH - A - 600 179
DE - B - 1 233 661
FR - A - 2 165 159
FR - A - 2 329 885
US - A - 1 755 590
US - A - 2 049 585
US - A - 2 129 949

Sch 13142 V/37b

(73) Patentinhaber: KONTAKTA, Alkatrészgyár, Helsinki ut 50-53, H-1725 Budapest (HU)

(72) Erfinder: Trummer, Gabor, Dipl.-Ing., Hosszuház utca 11, Budapest, XVIII (HU)

(74) Vertreter: Patentanwälte Viering & Jentschura et al, Steinsdorfstrasse 6, D-8000 München 22 (DE)

LIBER, STOCKHOLM 1986

## Beschreibung

Die Erfindung betrifft ein Einspannelement zum Einspannen eines zapfenartigen Bauteils, insbesondere einer Schraube, in einem Sackloch eines Werkstückes, mit einer im wesentlichen hufeisenförmigen Gestaltungsform aus zwei in gemeinsamer Ebene nebenienander angeordneten Schenkelabschnitten, die über einen Verbindungssteg miteinander verbunden sind und an ihren einander zugewendeten Innenrändern eine Innenverzahnung, und an ihren einander abgewendeten Außenrändern eine Außenverzahnung aufweisen.

Bekannt sind Schraubenverbindungen, bei welchen das Schraubengewinde in ein Muttergewinde eingreift. Dieses verläuft als geschlossene Schraubenlinie mit gegebener Gewindesteigung und führt die Schraube, bestimmt deren Bewegungsrichtung und die erforderliche Spannung der Schraubverbindung. In Kunststoffmaterialien werden Metalleinsätze mit Innengewinde eingepreßt, eingeschmolzen oder auf sonstige Weise nachträglich eingesetzt.

Derartige Ausführungsformen komplizieren jedoch die Herstellung und erfordern eine zusätzliche Hülse mit Innengewinde.

Demgegenüber können Einspannelemente der eingangs erwähnten Art (DE-B- 1 233 661) wesentlich einfacher gefertigt werden und führen zu einem geringeren Gesamtaufwand für die Herstellung der Verbindung des Bauteils mit einem Werkstück, insbesondere mit einem Werkstück aus Kunststoffmaterial. Das Einspannelement wird mit seinen Schenkelabschnitten in zwei beidseitig des Sackloches ausgebildete radiale Nuten gesteckt, so daß sie mit ihrer Innenverzahnung in das Sackloch hineinragen.

Durch Einsetzen des zapfenartigen Bauteils werden die Schenkelabschnitte auseinandergespreizt, so daß sie mit ihrer Außenverzahnung am Nutengrund verankert werden. Bei dem bekannten Einspannelement ist der Verbindungssteg der Schenkelabschnitte in derselben Ebene wie die Schenkelabschnitte innerhalb des Sackloches angeordnet, wodurch das Sackloch entsprechend länger als das einzuspannende zapfenartige Bauteil sein muß, und muß außerdem so gestaltet sein, daß er für das Auseinanderspreizen der Schenkelabschnitte nachgiebig ist.

Durch die Erfindung wird die Aufgabe gelöst, das Einspannenelement eingangs erwähnter Art so auszubilden, daß das Sackloch im wesentlichen die Länge der Schenkelabschnitte des Einspannelementes haben kann und deren leichtes Auseinanderspreizen erreicht wird.

Dies wird gemäß der Erfindung dadurch erreicht, daß der Verbundungssteg im wesentlichen U-förmig ausgebildet ist und aus der Ebene der Schenkelabschnitte heraus abgewinket ist und außerhalb des Einspanndurchmessers des zapfenartigen Bauteils veläuft.

Vorzugsweise verläuft der Verbindungssteg bogenförmig und schließt mit der Ebene der beid. Schenkelabschnitte einen rechten Winkel ein.

Die Innenverzahnung an den beiden Innenränder der Schenkelabschnitte weist vorzugsweise Gewindeprofil für den Eingriff in das Gewinde ein. Schraube auf. Ferner wird es für das leichtere Einsetzen des Einspannelementes in das Sackloch und einen gleichwohl festen Sitz des Einspannelementes in dem Sackloch bevorzugt, di beiden Schenkelabschnitte mit ihren freien Enden schräg aufeinanderzu verlaufen zu lassen, so daß sie durch das Einführung des zapfenartigen Bauteiles auseinandergespreizt werden.

Die Erfindung wird im folgenden anhand einer bevorzugten Ausführungsform, die aus der Zeichnung ersichtlich ist, näher beschrieben. In der Zeichnung zeigt:

Fig. 1 eine perspektivische Darstellung des erfingungsgemäßen Einspannelementes

Fig. 2 ein in bevorzugter Weise in einem Werkstüc ausgebildetes Sackloch, das zum Aufnehme des erfindungsgemäßen Einspannelementes geeignet ist,

Fig. 3 das in das Werkstückloch eingesetzte Einspannelement, in das ein Bauteil, hier eine Schraube, eingespannt wird und

Fig. 4 das aus Fig. 3 ersichtliche Einspannelement nach dem Einspannen des Bauteiles.

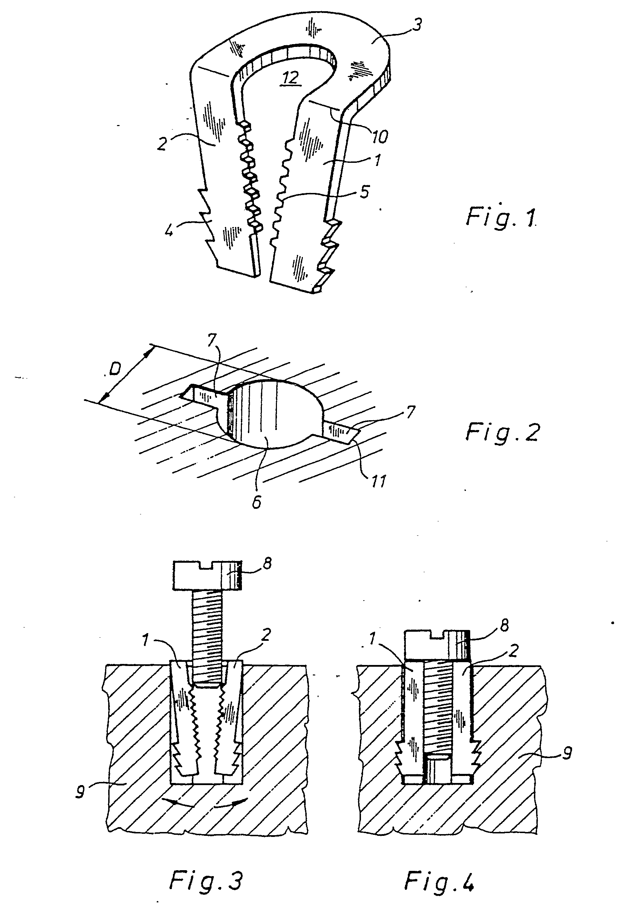

Wie aus Figur 1 ersichtlich, besteht gemäß einer bevorzugten Ausführungsform das erfindungsgemäße Einspannelement im wesentlichen aus einem hufeisenförmig gestaltete Materialstreifen, dessen in gleicher Ebene liegende Schenkelabschnitte 1, 2 im ungespreizten Zustand derart ausgerichtet sind, daß sich die gedachten, über die freien Enden der Schenkelabschnitte 1, 2 hinaus erstreckenden Verlängerungen in einem spitzen Winkel schneiden, der etwa 10° bis 20°, bevorzugt jedoch etwa 15°beträgt. Der die beiden Schenkelabschnitte 1, 2 verbindende Steg 3 ist insgesamt U-förmig und kann als Winkelplatte ode — wie bei der dargestellten Ausführungsform — a ebener, bogenförmig verlaufender Materialstreifen ausgebildet sein, der halbkreisförmig verläuft und einstückig mit den Schenkelabschnitten 1, 2 ausgebildet ist. An der Verbindungsstelle 10 des Verbindungssteges 3 und der Schenkelabschnitte 1 2 ist der Verbindungssteg 3 um einen Winkel von wenigstens etwa 90° aus der Ebene der Schenkelabschnitte 1, 2 heraus abgewinkelt.

Mittels des dargestellten Einspannelementes soll ein als Maschinenschraube 8 ausgebildetes Bauteil in einem Werkstück 9 eingespannt werden. Wie au. den Figuren 1, 3 und 4 ersichtlich, weisen die insgesamt rechteckigen Schenkelabschnitte 1, 2 größerer Länge als Breite an ihren einander zugewandten Innenrändern eine Innenverzahnung in Form eines Gewindeprofils auf, das dem der einzuspannenden Schraube 8 entspricht und derart ausgebildet ist, daß die an dem Schenkelabschnitt angeordneten Gewindezähne gegenüber den am Schenkelabschnitt 2 angeordneten Gewindezähnen um die halbe Steigung der einzuspannenden Schraube 8 versetzt sind. An den einander abgewandten Außenrändern der Schenkelabschnitte 1, 2 ist eine Außenverzahnung 4 vorgesehen, die im Bereich der freien Enden der Schenkelabschnitte 1, 2 angeordnet und derart ausgebildet ist, daß die dem Steg 3 zugewandten Flanken der Zähne der Außenverzahnung 4 nahezu rechtwinklig zu den Außenrändern der Schenkelabschnitte 1, 2 stehen, während die dem freien Ende der Schenkelabschnitte 1, 2 zugewandten Flanken dieser Zähne mit einem Winkel kleiner als 45° zu den Außenrändern der Schenkelabschnitte 1, 2 angestellt sind. Durch eine solche sägezahnartige Ausbildung der Verzahnung 4 wird erreicht, daß es ohne Zerstörung der einzelnen Bauteile nicht möglich ist, das in ein Sackloch 6 eingesetzte und dort durch das Eindrehen der Schraube 8 verspreizte Einspannelement herauszuziehen.

Das erfindungsgemäße Einspannelement ist in solchen, in einem Werkstück 9 angeordneten Sacklöchern 6 zu verspreizen, die wie nach Fig. 2 ausgebildet sind, d.h. um 180° gegeneinander versetzte, in Längsrichtung der Löcher 6 verlaufende Nuten 7 aufweisen, in deren Nutengrund 11 die Zähne der Außenverzahnung 4 im verspreizten Zustand des Einspannelementes eindringen (Fig. 4). Die Anordnung der Nuten 7 ist auch deshalb von Vorteil, weil durch sie ein Verdrehen des Einspannelementes während des Eindrehens einer Schraube verhindert wird. Der Abstand der Nutböden 11 voneinander wie auch der Abstand der Außenränder der Schenkelabschnitte 1, 2 voneinander in Höhe der Verbindungsstelle 10 bzw. die an dieser gemessene Breite des Verbindungssteges 3 entspricht vorzugsweise dem Durchmesser des Kopfes der Schraube 8.

Der U-förmig, beispielsweise rechteckförmig oder halbkreisförmig verlaufend ausgebildete Verbindungssteg 3 ist derart ausgebildet, daß die von ihm umgrenzte Aussparung 12 mindestens die kreisförmige Öffnung des Sackloches 6 freiläßt. Diese Öffnung ist in Fig. 2 durch den sog. Einspanndurchmesser D definiert, der vorzugsweise dem Außendurchmesser des Gewindes der Schraube 8 entspricht.

Das Material des Werkstückes 9 ist vorzugsweise weicher als das des erfindungsgemäßen Einspannelementes, das bevorzugt aus Metallblech gefertigt ist aber auch aus einem anderen Material beispielsweise Kunststoff bestehen kann. Ferner Wird es bevorzugt, als Material für das Werkstück 9 und/oder das Einspannelement ein elastisches Material vorzusehen, so daß ihre Spannverbindung elastisch und daher lösbar ist. Jedoch kann auch wenigstens einer der Verbindungspartner plastisch verformbar sein.

Das Einspannelement wird bevorzugt zunächst als ebenes U-förmiges Teil hergestellt und dann in einer Maschine oder von Hand an der Stelle 10 abgebogen. Das Abbiegen kann durch ein Einritzen der Oberfläche an der Abbiegestelle 10 erleichtert werden.

Das Sackloch 6 kann, insbesondere sofern es in einem Kunststoffkörper ausgebildet werden soll, durch Einpressen oder Stoßen hergestellt werden.

Der Verbindungssteg 3 kann für den Fall, daß d Einspannelement aus federelastischem Material is und daß der Abbiegewinkel zwischen dem Verbindungssteg 3 und den Schenkelabschnitten 2 kleiner oder größer als 90° ist, auch als Federscheibe wirken, durch die eine Sicherung de eingedrehten Schraube 8 erzielt wird. In einer bevorsugten Ausführungsform kann der Verbindungssteg 3 sogar derart ausgebildet sein, daß es z.B. für eine in dem Einspannelement einzuspannende Sechskantschraube als Sicherungsblech verwendbar ist. Für diesen Fall is es von Vorteil, an dem Verbindungssteg 3 einen · Lappen (in der Zeichnung nicht dargestellt) anzuformen, der nach dem Eindrehen einer Mehrkantkopfschraube 8 derart abgebogen wird, daß er an einer Schlüsselfläche des Schraubenkopfes anliegt und daher ein nachträgliches Verdrehen der Schraube 8 verhinde ist.

## Patentansprüche

1. Einspannelement zum Einspannen eines zapfenartigen Bauteiles (8), insbesondere einer Schraube (8), in einem Sackloch (6) eines Werkstückes (9), mit einer im wesentlichen hufeisenförmigen Gestaltungsform aus zwei in gemeinsamer Ebene nebeneinander angeordneten Schenkelabschnitten (1, 2), die über einen Verbindungssteg (3) miteinander verbunden sind und an ihren einander zugewendeten Innenrändern eine Innenverzahnung (5), und an ihren einander abgewendeten Außenrändern eine Außenverzahnung (4) aufweisen, dadurch gekennzeichnet, daß der Verbindungssteg (3) im wesentlichen U-förmig ausgebildet ist und aus der Ebene der Schenkelabschnitte (1, 2) heraus abgewinkelt ist und außerhalb des Einspanndurchmessers (D) des zapfenartigen Bauteiles (8) verläuft.

2 Einspannelement nach Anspruch 1, dadurch gekennzeichnet, daß der Verbindungssteg (3) bogenförmig verläuft.

3. Einspannelement nach Anspruch 1 oder 2, dadurch gekennzeichnet daß der Verbindungssteg (3) mit der Ebene der Schenkelabschnitte (1, 2) einen Winkel von 90° einschließt.

4. Einspannelement nach einem der Ansprüche 1–3, dadurch gekennzeichnet, daß die Innenverzahnung (5) ein Gewindeprofil aufweist.

5. Einspannelement nach einem der Ansprüche 1–4, dadurch gekennzeichnet, daß die beiden Schenkelabschnitte (1, 2) mit ihren freien Enden schräg aufeinanderzu verlaufen.

## Claims

1. Clamping element for clamping a pin-like member (8), especially a screw (8), in a blind hole (6) of a workpiece (9) having a substantially horseshoeshaped form of two leg sections (1, 2) located sida by side in a common plane and connected by a connecting crosspiece (3) and provided with an internal toothing (5) at their facing inner edges and with an external tootning (4) at their opposite outer edges, characterised in that the connection crosspiece (3) is substantially U-shaped and is bent outof the plane of the leg sections (1, 2) and extends outside the clamping diameter (D) of the pin-like member (8).

2. Clamping element according to claim 1, characterised in that the connecting crosspiece (3) is curved.

3. Clamping element according to claim 1 or 2, characterised in that the connecting crosspiece (3) encloses an angle of 90° with the plane of the leg sections (1, 2).

4. Clamping element according to one of Claims 1 to 3, characterised in that the internal toothing (5) comprises a thread profile.

5. Clamping element according to one of claims 1 to 4, characterised in that the two leg sections (1, 2) extend obliquely convergently with respect to eachother towards their free ends.

## Revendications

1. Organe de blocage pour bloquer un élément d'assemblage (8) en forme de cheville, tel qu'une vis (8) dans un trou borgne (6) d'une pièce (9) et qui présente la forme générale d'un fer à cheval avec deux parties de jambe (1, 2), disposées l'une côté de l'autre dans le même plan et qui sont reliées l'une à l'autre par une barrette de lialison (3 et présentent, sur leurs bords intérieurs tournés l'u vers l'autre une denture intérieure (5) et sur leurs bords extérieurs opposés une denture extérieure (4), caractérisé en ce que la barrette de liaison (3) est réalisée sensiblement en forme de U et est plié vers l'extérieur à partir du plan des parties de jambe (1, 2) et s'étend au-delà du diamètre de blocage (D) de l'élément d'assemblage (8) en form de cheville.

2. Organe de blocage selon la revendication 1, caractérisé en ce que la barrette de liaison (3) présente une forme arquée.

3. Organe de blocage selon la revendication 1 o: 2, caractérisé en ce que la barrette de liaison (3) fait, avec le plan des parties de jambe (1, 2), un angle de 90°.

4. Organe de blocage selon l'une des revendications 1 à 3, caractérisé en ce que la denture intérieure (5) présente un profil de filetage

5. Organe de blacage selon l'une des revendications 1 à 4, caractérisé en ce que les deu: parties de jambe (1, 2) sont inclinées l'une vers l'autres par leurs extrémités libres.

Fig. 1

Fig. 2

Fig. 3

Fig. 4

1